Europäisches Patentamt

European Patent Office

Office européen des brevets

(19)

(11) **EP 0 501 329 B1**

(12) **EUROPÄISCHE PATENTSCHRIFT**

(45) Veröffentlichungstag und Bekanntmachung des Hinweises auf die Patenterteilung:
**07.08.1996 Patentblatt 1996/32**

(51) Int Cl.⁶: **C08L 25/04**, C08L 25/06, C08L 33/10

(21) Anmeldenummer: **92102923.7**

(22) Anmeldetag: **21.02.1992**

(54) **Verträgliche Polymermischungen**

Compatible polymer mixtures

Mélanges de polymères compatibles

(84) Benannte Vertragsstaaten:
**AT BE CH DE DK ES FR GB IT LI NL SE**

(30) Priorität: **23.02.1991 DE 4105793**

(43) Veröffentlichungstag der Anmeldung:
**02.09.1992 Patentblatt 1992/36**

(73) Patentinhaber: **Röhm GmbH**
**D-64293 Darmstadt (DE)**

(72) Erfinder:
• **Siol, Werner, Dr.**
**W-6100 Darmstadt-Eberstadt (DE)**
• **Felger, Erwin**
**W-6100 Darmstadt (DE)**
• **Terbrack, Ulrich**
**W-6107 Reinheim 2 (DE)**

(56) Entgegenhaltungen:
**EP-A- 0 359 185**        **DE-A- 3 730 025**

**Beschreibung**

Gebiet der Erfindung

Die vorliegende Erfindung betrifft verträgliche Polymermischungen aus Polystyrol und Polyethylmethacrylat sowie Verbundsysteme, die aus Polystyrol und Polyethylmethacrylat aufgebaut sind.

Stand der Technik

Polymerverträglichkeit gilt seit Beginn der einschlägigen Untersuchungen als die Ausnahme, Unverträglichkeit als die Regel. (Vgl. Kirk-Othmer, Encyclopedia of Chemical Technology, 3rd Ed. Vol. 18, pg. 443 - 478 J. Wiley 1982). Frühere Untersuchungen zur Kompatibilität von Polystyrol schienen dessen generelle Unverträglichkeit mit anderen Polymeren zu bestätigen (vgl. R. J. Petersen et al., Polymer Preprints Am. Chem. Soc. Div. Polym. Chem. 10, 385 (1969).

In jüngster Zeit wurden jedoch einige mit Vertretern der Polystyrolfamilie verträgliche Polyalkyl(meth)acrylate aufgefunden. So ist Polystyrol mit Polycyclohexyl(meth)acrylat bis hin zur Zersetzung (> 250 Grad C) verträglich. (Vgl. US-A 4 898 912, dort wird auch der Stand der Technik eingehend gewürdigt). Ferner sind Copolymerisate aus Methylmethacrylat bzw. Ethylmethacrylat einerseits und höheren Alkylestern der Methacrylsäure andererseits mit Polystyrolen verträglich (vgl. DE-A 37 30 025). Besonders gute Verträglichkeit mit Polystyrol wird gefunden, wenn auch kleine Anteile Cyclohexylmethacrylat im Polymeren enthalten sind (DE-A 37 30 026).

Poly-α-methylstyrol zeigt bei Raumtemperatur Verträglichkeit mit PMMA, Polyethylmethacrylat und Polybutylmethacrylat. Mit Polycyclohexyl(meth)acrylat wurde unbegrenzte Verträglichkeit gefunden (vgl. US-A 4 849 479) Polyalkylstyrole, (z.B. die aus den Monomeren p-Methylstyrol, p-tert. Butylstyrol) zeigen ganz allgemein Verträglichkeit mit Polyalkyl(meth)acrylaten, wenn die Bedingung erfüllt ist, daß die Seitenketten der Polyalkylstyrole und die Seitenketten der Polyalkylmethacrylate vergleichbare Van-der-Waals-Volumina aufweisen.

Aus den Arbeiten von Somani und Shaw, die die Mischbarkeit von Poly(meth)acrylaten mit Polystyrol mit Hilfe der Schmelztitration (Melt Titration) untersuchten, geht hervor, daß diese Polymertypen für alle praktischen Zwecke unverträglich sind (Mischbarkeit nur im Bereich $10^{-5}$ - $10^{-6}$ Gewichtsanteile). Die Untersuchungen erstreckten sich auf Mischungen von Polystyrol mit Polymethylacrylat, Polyethylacrylat, Polybutylacrylat, Poly-n-butylmethacrylat und Polymethylmethacrylat (vgl. R. H. Somani, M.T. Shaw, Macromolecules 14, 1549 (1981)).

Ausnahmen von dem typischen Unverträglichkeitsverhalten der Homopolymeren dieser Polymerklasse konnte der Fachmann nach dem Stand der Technik nicht erwarten. Nicht-mischbare Polymer-Blends sind im Regelfall opak, es sei denn, die Komponenten besitzen annähernd gleiche Brechungsindices. Blends aus Polystyrol und PMMA zeigen daher eine perlartige Opaleszenz die gelegentlich für dekorative Zwecke ausgenutzt wird (vgl. O. Olabisi, L.M. Robeson & M.T. Shaw, Polymer-Polymer Miscibility pg. 341, Academic Press 1979).

Aufgabe und Lösung

Anwendungstechnisch gesehen bieten sowohl mischbare als auch nicht-mischbare Polymersysteme interessante Aspekte. Mischbare Polymersysteme bringen in der Regel auch mechanische Kompatibilität mit sich (vgl. O. Olabisi et al. loc.cit pg. 351). Vorteilhaft ist bei an sich transparenten Mischungspartnern auch die resultierende Transparenz des Systems. Nach den oben dargestellten Befunden ließ der Stand der Technik nicht erwarten, daß sich im Bereich der Poly(meth)acrylsäureester von niederen Alkanolen verträgliche Mischungen mit Polystyrol würden gewinnen lassen.

Es wurde nun gefunden, daß entgegen allen Erwartungen unter bestimmten Randbedingungen verträgliche Systeme aus Polystyrol einerseits und einem Vertreter der Polyalkylmethacrylsäureester andererseits gebildet werden können.

Die vorliegende Erfindung betrifft somit verträgliche Polymermischungen PM aus Polystyrol und einem Polymethacrylsäureester, wobei die Mischung PM gebildet wird aus

(A) 0,1 bis 99,9, vozugsweise 1 bis 99, besonders bevorzugt 2 bis 98, speziell 5 bis 95, ganz speziell 20 bis 80 Gew.-% eines Polystyrols, das zu wenigstens 95 Gew.-% aus Styrol aufgebaut ist (= Polymer P1) und

(B) 99,9 bis 0,1, vorzugsweise 99 bis 1, speziell 95 bis 5, ganz speziell 80 bis 20 Gew.-% eines Poly(meth)acrylsäureesters der a) zu > 90 und bis 100 Gew.-%, vorzugsweise mindestens 91 Gew.-% aus Ethylmethacrylat und b) null bis < 10 Gew.-%, vorzugsweise wenigstens 1 und bis zu 9 Gew.-%

eines weiteren mit Ethylmethacrylat copolymerisierbaren Monomeren, insbesondere (Meth)acrylestern cyclischer Al-

EP 0 501 329 B1

kanole, speziell des Cyclohexanols und des Cyclopentanols besteht (= Polymer P2) mit der Maßgabe, daß sich a) und b) in der Komponente (B) zu 100 Gew.-% ergänzen, wobei wenigstens eine der Polymerkomponenten ein Molekular gewicht von weniger als 100 000 Dalton besitzt. Von besonderem Interesse ist eine Polymermischung PM aus überwiegenden Anteilen (> 50 Gew.-%) an Styroleinheiten z.B. an Polystyrol. Vorzugsweise macht die Summe der Polymerkomponenten (A) plus (B) einhundert Prozent der gesamten Polymeren in der Mischung PM aus, wobei die Polymermischung PM jedoch im weiteren unter Umständen anstelle eines einheitlichen Polymeren eingesetzt, d.h. in Kombination mit weiteren Polymeren verarbeitet werden kann.

Angesichts der Befunde des Standes der Technik muß die Verträglichkeit der erfindungsgemäß herzustellenden Abmischungen aus dem Polystyrol gemäß (A) und dem Polymethacrylat gemäß (B) als überraschend betrachtet werden.

Besonders erwähnt seien die Polymermischungen aus Polystyrol als Polymerkomponente (A) und Polyethylmethacrylat als Polymerkomponente (B) (= Polymermischung PM-1), d.h. Mischungen von Homopolymeren. Solche Mischungen sind bei Raumtemperatur in praktisch allen Abmischungsverhältnissen verträglich im Gegensatz zu den nächstverwandten Homologen, dem PMMA und dem Polybutylmethacrylat für die keine Verträglichkeit mit Polystyrol gefunden wurde.

Zum Verständnis des außerordentlich überraschenden Verhaltens der Polyethylmethacrylat-Komponente im Vergleich zu anderen Polyalkylmethacrylaten kann man geometrische Überlegungen heranziehen. So ergibt sich, wenn man die Ethylcarbonat-Gruppe des Polyethylmethacrylats als Pseudocyclus auffaßt bezüglich der Seitenketten gute geometrische Übereinstimmung mit Phenylresten des Polystyrols.

Die **Charakterisierung** der erfindungsgemäßen Polymermischungen PM als **verträgliche** Mischungen erfolgt nach den anerkannten Kriterien (vgl. Kirk-Othmer, loc.cit. Vol 18, pp. 457 - 460, inbesondere

a) Bei Anwendung optischer Verfahren beobachtet man bei den erfindungsgemäßen Polymermischungen PM einen **einzigen Brechungsindex,** der zwischen denen der beiden Polymerkomponenten (A) und (B) liegt.
b) Die Polymermischungen PM besitzen eine einzige Glastemperatur Tg (die zwischen der der Polymerkomponente liegt).

(Zur Bestimmung der Glastemperatur Tg vgl. auch H.F. Mark et al. Encyclopedia of Polymer Science & Technology, 2nd Ed., Vol. 7, pg. 532 - 544, John Wiley & Sons 1987). Innerhalb der bestehenden Auswahlmöglichkeiten ist darauf zu achten, daß die Glastemperatur Tg des resultierenden Polymerisats die technische Anwendbarkeit des Gesamtsystems PM nicht einschänkend beeinflußt. So soll für die Herstellung von Formkörpern aus der Polymermischung PM wenigstens eines der Polymeren eine Glastemperatur Tg > 50 Grad C aufweisen, bevorzugt ist für diese Anwendung, daß auch die Polymermischung PM eine Glastemperatur Tg > 50 Grad C aufweist. Diese Bevorzugung gilt insbesondere für die Herstellung von spritzgegossenen, gepreßten bzw. extrudierten Gegenständen aus der Polymermischung PM. Für andere Anwendungsgebiete, beispielsweise für Lacke, für Elastomere oder für eine reversible thermotrope Verglasung (Polymermischung mit Trübungspunkt beim Erwärmen, etwa gemäß DE-A 34 36 477) sind jedoch auch solche Polymermischungen PM von Vorteil, die eine Polymerkomponente (B) mit Glastemperatur Tg < 40 Grad C besitzen. Für all diese Anwendungen ist von Interesse, daß die erfindungsgemäße Polymermischung im allgemeinen eine sehr gut einstellbare Trübungstemperatur im Bereich von Raumtemperatur bis hin zu ca. 250 Grad C aufweist (siehe Beispiel 1).

Aus den erfindungsgemäßen Polymermischungen können Lösungen oder Dispersionen, z.B. für Polymerfilme, hergestellt werden.

Bevorzugte Ausführungsformen der Erfindung sind in den Unteransprüchen beschrieben.

Herstellung der Polymerisate (A) und (B)

Die Herstellung der Polymerisate (A) und (B) kann nach den bekannten Regeln der Polymerisation und nach bekannten Verfahren erfolgen. Die Polystyrole vom Typ (A) können z.B. nach Houben-Weyl, Methoden der organischen Chemie, 4. Auflage, Bd. XIV/1, pp 761 - 841, Georg Thieme-Verlag (1961) hergestellt werden. Sie sind auch in geeigneter Form im Handel erhältlich. Dabei kann vorzugsweise das radikalische, es können aber auch ionische Polymerisationsverfahren zur Anwendung kommen. Die Molgewichte M der erfindungsgemäß eingesetzten Polymeren (A) liegen in der Regel oberhalb von 2 000, bevorzugt im Bereich von 5 000 - 5 000 000 besonders bevorzugt im Bereich 20 000 - 200 000 Dalton. (Bestimmung durch Lichtstreuung; vgl. Ullmann's Encyclopädie der Technischen Chemie, 4. Auflage, Bd. 15, S. 285 - 387, Verlag Chemie 1978).

Die Herstellung der Homo- bzw. Copolymerisate B) erfolgt nach bekannten Verfahren. (Vgl. H. Rauch-Puntigam, Th. Völker Acryl- und Methacrylverbindungen, Springer-Verlag 1967). Wenn auch prinzipiell eine Herstellung durch anionische Polymerisation oder Group-Transfer-Polymerisation (siehe auch O.W. Webster et al., J. Am. Chem. Soc., 105, 5706 (1983) möglich ist, so ist doch die bevorzugte Herstellungsform die radikalische Polymerisation.

Die Molgewichte M der Polymerisate B) liegen in der Regel oberhalb von 2 000 im allgemeinen im Bereich von 10 000 bis 2 000 000, vorzugsweise 20 000 bis 200 000 (Lichtstreuung).

Als zweckmäßig hat sich erwiesen, wenn wenigstens eine der beiden Polymerkomponenten (A) oder (B) ein Molgewicht M unterhalb 100 000 besitzt. Vorzugsweise besitzt sowohl die Komponente (A) als die Komponente (B) ein Molekulargewicht unterhalb 100 000 und oberhalb 2 000 Dalton. Besonders bevorzugt ist somit für wenigstens eine der Polymerkomponenten der Molekulargewichtsbereich 2 000 bis 1 000 000 Dalton.

Herstellung der Mischungen PM

Die verträglichen Mischungen PM können durch die unterschiedlichen Verfahren hergestellt werden, sie werden z. B. durch intensives mechanisches Vermischen der Komponenten (A) und (B) in der Schmelze, im Extruder usw. erzeugt; oder sie können auch aus einem gemeinsamen Lösungsmittel heraus als sogenannte "solution cast polyblends" hergestellt werden. (Vgl. Kirk-Othmer, Encyclopedia of Chemical Technology, 3rd. Ed. Vol. 18, pg. 443 - 478, J. Wiley, 1982). Auch kann so vorgegangen werden, daß Polymer (A) in der Monomermischung des anderen Polymeren (B) aufgelöst wird und anschließend Polymer (B) in Gegenwart von Polymer (A) erzeugt wird. Umgekehrt kann natürlich auch Polymer (A) in Gegenwart des Polymeren (B) erzeugt werden. Ebenso kann die Polymermischung PM aus gemeinsamen Fällungsmitteln erzeugt werden. Der Mischungsart sind keine Grenzen gesetzt.

Man erzeugt in der Regel zunächst Mischungen der Komponenten (A) und (B) wobei vorteilhaft von Feststoffen in Form beispielsweise eines Perlpolymerisats oder eines Granulats ausgegangen wird unter Verwendung langsam laufender Mischaggregate wie z.B. Trommel, Rhönrad-, Doppelkammer-Pflugscharmischern. Die langsam laufenden Mischaggregate verursachen ein mechanisches Mischen, ohne daß die Phasengrenzen aufgehoben werden. (Vgl. Ullmanns Encyklopädie der Technischen Chemie, 4. Auflage, Bd. 2, pg. 282 - 311, Verlag Chemie). Anschließend erfolgt die thermoplastische Aufbereitung durch homogenes Mischen in der Schmelze unter Verwendung von heizbaren Mischaggregaten bei den dafür geeigneten Temperaturen z.B. 150 bis ca. 300 Grad C in Knetern oder vorzugsweise Extrudern, z.B. Ein- oder Mehrschneckenextrudern oder gegebenenfalls in Extrudern mit oszillierender Schnecke und Scherstifen (z.B. im BUSSCO-Kneter).

Man kann nach diesen Verfahren Gleichkorngranulate (z.B. Heißabschlag, Würfelform, Rundkorn) herstellen. Die Korngröße der Granulate liegt dabei im Bereich 2 bis 5 mm. Eine weitere, einfache Methode zur Erzeugung der Polymerverbindungen PM ist das Abmischen von Polymerdispersionen (enthaltend Polymerkomponente (A) und Polymerdispersionen, enthaltend die Polymerkomponente (B)). Diese Dispersionsmischungen können gemeinsam koaguliert werden, gemeinsam sprühgetrocknet werden oder gemeinsam auf einem Extruder abgequetscht werden. Andererseits können die Dispersionsmischungen auch gemeinsam zu einem Film aufgetrocknet werden.

Vorteilhafte Wirkungen der Mischungen PM

Die erfindungsgemäßen verträglichen Polymermischungen PM weisen insbesondere die nachfolgenden Vorteile auf, die die entsprechenden technischen Einsatzmöglichkeiten nahelegen, wobei "Polystyrol" bzw. "Polyethylmethacrylat" jeweils stellvertretend für die unter die Polymeren (A) bzw. (B) fallenden Möglichkeiten aufgeführt sei.

1) Zunächst sind die Polymermischungen - im Unterschied zu Mischungen aus anderen Poly(meth)acrylaten und Polystyrolen - verträglich, d.h. die erfindungsgemäßen Polymermischungen sind im nicht pigmentierten Zustand im Unterschied zu nicht verträglichen Polystyrol/Poly(meth)acrylatabmischungen glasklar (sie zeigen keine Lichtstreuung, d.h. in der Regel ist der Haze < 10 %). Erfindungsgemäß sind aber auch solche Mischungen, die nur bei Raumtemperatur verträglich sind, bei Temperaturerhöhung jedoch Entmischung zeigen.

2. Mischungen aus Polystyrolen und Polyethylmethacrylaten zeigen eine mäßige Wasseraufnahme.

3. Durch Abmischen mit Polyethylmethacrylat läßt sich die Doppelbrechung des Polystyrols reduzieren. Die beiden vorgenannten Eigenschaften qualifizieren die erfindungsgemäßen Polymermischungen PM speziell als Datenspeichermaterial, insbesondere für optisch ablesbare Informationsträger (z.B. Datenspeicherplatten). [Vgl. J. Hennig, Kunststoffe 75, pg. 425 (1985)].

4. Durch Abmischen mit Polyethylmethacrylat kann auch der Brechungsindex des Polystyrols reduziert werden. Beispielsweise kann Polystyrol durch Abmischen mit Polyethylmethacrylat im Brechungsindex so verändert werden, daß der Brechungsindex der Polystyrol/Polyethylmethacrylatmischung dem Brechungsindex einer eingelagerten Gummiphase angepaßt wird. Auf diesem Weg kann man transparente, schlagzähe Kunststoffe erhalten.

Besonderes Interesse finden auch Polymerkompositionen, die zu ca. 40 - 99 Gew.-%, bevorzugt 70 - 95 Gew.-% aus der Polymermischung PM und zu 60 - 1 Gew.-%, bevorzugt 30 - 5 Gew.-% aus einem weiteren von P1 und P2 chemisch unterscheidbaren Polymeren P3 besteht, wobei gilt, daß Polymer P3 mit Polymer P1, P2 und mit der Mischung PM unverträglich ist.

In der Regel wird dabei die Zusammensetzung der Polymermischung PM so gewählt, daß der Brechungsindex des Polymeren P3 mit dem Brechungsindex der Mischung PM übereinstimmt, in der Regel soll also bei Raumtemperatur gelten:

$$\left| n_D^{25}{}_{PM} - n_D^{25}{}_{P3} \right| < 0,01$$

In der Regel wird das mit PM unverträgliche Polymere P3 eine Tg < 20 Grad C aufweisen und wenigstens teilweise mit wenigstens einem der Bestandteile der Polymermischung PM, also mit P1 oder P2, kovalent verknüpft sein. Darüber hinaus kann das Polymere P3 vernetzt sein.

Ganz besonders bevorzugt ist der Fall, daß das Polymere P3 Polybutadien oder Polyisopren ist.

Polymerkompositionen, aufgebaut aus 40 - 99 Gew.-% PM und 1 - 60 Gew.-% P3 zeichnen sich, insbesondere wenn P3 eine Tg < 20 Grad C aufweist, durch eine im Vergleich zu reinem PM verbesserte Schlagzähigkeit aus.

Insbesondere gestatten Polymerkompositionen aus 40 - 99 Gew.-% PM und 60 - 1 Gew.-% P3 eine einfache Schlagzähabmischung von Polymeren P2. So kann gegebenenfalls sprödes P2 durch Abmischen mit handelsüblichem, schlagzäh ausgerüstetem P1 (z.B. Styrol-Butadien-Blockcopolymere) zu einer hoch schlagzähen, klaren PM/P3-Polymerkomposition abgemischt werden.

5. Durch Umhüllung von Polystyrol mit Polyethylmethacrylat mit einer Zwischenschicht aus der verträglichen Polymermischung ist die Herstellung einer Polymermischung optischen Gradientenfaser möglich: Dabei erhält man folgende Daten:

| Kern: Polystyrol | Brechungsindex $n_D^{20} = 1,59$ |
|---|---|
| Mantel: Polyethylmethacrylat | $n_D^{20} = 1,48$ |
| Übergang: Kontinuierlich | |

Derartige Faser können z.B. als Lichtleitkabel Verwendung finden.

6. Gegenstände aus Polystyrol mit einem dünnen Mantel aus Polyethylmethacrylat, insbesondere aus einem Polyethylmethacrylat mit (einpolymerisiertem) UV-Absorber sind zugänglich. Brauchbare UV-Absorber sind z.B. in Kirk-Othmer 3rd. Ed. Vo. 23, pp. 615 - 627, J. Wiley 1983 und in US-A 4 576 170 beschrieben. Im Gegensatz zu nicht umhülltem Polystyrol sind solche Gegenstände witterungsstabil. Das ansonsten gravierende Problem der Wiederverwendung heterogen beschichteter Kunststoffabfälle entfällt, da Abfälle aufgrund der guten Verträglichkeit wieder eingearbeitet werden können. In der Regel werden die Gegenstände aus Polystyrol bzw. aus der Polymerverbindung PM durch Spritzen, Pressen, Extrudieren, Walzen oder Gießen hergestellt. Der Mantel aus Polymer P2 wird in der Regel durch Lackieren oder durch Coextrudieren aufgebracht.

7. Platten aus Polystyrol mit einem Überzug aus Polyethylmethacrylat lassen sich herstellen. Platten mit einem derartigen Aufbau weisen gegenüber unbehandelten Polystyrolplatten eine um ca. 2 % verbesserte Lichtdurchlässigkeit auf. In der Regel weisen Platten mit einem Überzug aus Polyethylmethacrylat eine veränderte Korrosionsbeständigkeit auf. Besonders interessant sind Mehrfachstegplatten, wie sie beispielsweise zum Verglasen von Gewächshäusern eingesetzt werden, die aus Polystyrol oder einer Polymermischung PM hergestellt worden sind und einen Überzug aus einem Ethylmethacrylat-haltigen Polymeren (= Polymer P2) aufweisen. (DE-A 16 09 777). Weiter können Verklebungen von Polystyrolen mit dem Polymer P2 oder vorteilhaft mit Ethylmethacrylat enthaltenden Monomeren/Initiator-Mischungen durchgeführt werden. Hier kann die hohe Polymerisationsgeschwindigkeit der Methacrylate mit der guten Polymerverträglichkeit kombiniert werden.

8. Verarbeitungstechnische Vorteile resultieren bei der Anwendung von Mischungen PM aus > 90 Gew.-% Polystyrol und < 10 Gew.-% Polymethylmethacrylat. In diesem Falle übernimmt das Polymethacrylat die Funktion eines Verarbeitungshilfsmittels.

9. Aus Polystyrol/Polyethylmethacrylatmischungen lassen sich transparente Formkörper gewinnen, die an der Oberfläche durch Energieeinwirkung, z.B. geeignete Strahlung so modifiziert worden sind, daß das Polymethacrylat abgebaut worden ist, das Polystyrol jedoch nicht. (Formkörper mit reflexmindernder Oberfläche, Resists).

Die folgenden Beispiele dienen zur Erläuterung der Erfindung.

Die Bestimmung der VICAT-Erweichungstemperatur erfolgt nach DIN 53460.

Die Bestimmung der reduz. Viskosität ($\eta$spec/$_c$) in Anlehnung an DIN 1342, DIN 51562 und DIN 7745. Die Bestimmung der Lichtdurchlässigkeit kann - sofern nicht anders vermerkt - nach DIN 5036 vorgenommen werden. Die Trübung (haze) wird in % (ASTM D 1003) angegeben.

BEISPIELE

Beispiel 1

Polyethylmethacrylat (PEMA J = 27 ml/g) wird in Toluol als Lösemittel mit Polystyrol (PS, hergestellt durch radikalische Polymerisation mit tert.Dodecylmercaptan als Regler, J = 46 ml/g) gemischt.
Aus den Mischungen werden Filme hergestellt, die bei Raumtemperatur getrocknet werden. Man erhält glasklare, verträgliche Polymerfilme, die beim Erwärmen entmischen.

Mischungsverhältnis (Gew.-%)

| PEMA | PS | Trübungstemperatur (Grad C) |
|------|-----|------------------------------|
| 70 | 30 | 79 |
| 60 | 40 | 79 |
| 50 | 50 | 75 |
| 40 | 60 | 75 |
| 30 | 70 | 75 |
| 20 | 80 | 80 |
| 10 | 90 | 103 |

**Patentansprüche**

1. Verträgliche Polymermischungen aus Polystyrol und einem Polymethacrylsäureester,
   dadurch gekennzeichnet,
   daß die Polymermischung PM gebildet wird aus den Komponenten

   (A) 0,1 - 99,9Gew.-% eines Polystyrols, das zu wenigstens 95 Gew.-% aus Styrol aufgebaut ist (Polymer P1) und

   (B) 99,9 - 0,1 Gew.-% eines Polymethacrylsäuresters der

   a) zu mehr als 90 bis zu 100 Gew.% aus Ethylmethacrylat und
   b) zu null bis weniger als 10 Gew.-% aus wenigstens einem mit Ethylmethacrylat copolymerisierbaren Monomeren, mit der Maßgabe, daß sich a) plus b) zu 100 Gew.-% ergänzen (Polymer P2) und dass wenigstens eine der Polymerkomponenten ein Molekulargewicht von weniger als 100 000 Dalton besitzt.

   aufgebaut ist.

2. Verträgliche Polymermischungen gemäß Anspruch 1, dadurch gekennzeichnet, daß sowohl Polymer P1 als auch Polymer P2 ein Molekulargewicht im Bereich > 2 000 bis < 100 000 Dalton besitzt.

3. Verträgliche Polymermischungen gemäß Anspruch 1, dadurch gekennzeichnet, daß die Polymermischung PM aus Polystyrol als Komponente (A) und aus Polyethylmethacrylat als Komponente (B) gebildet wird.

4. Verträgliche Polymermischungen gemäß Anspruch 1, dadurch gekennzeichnet, daß das Polymer P2 in Komponente (B) als Bestandteil b) den (Meth)acrylsäureester eines C5-C6-Cycloalkanols enthält.

5. Verträgliche Polymermischungen gemäß Anspruch 4, dadurch gekennzeichnet, daß Polymer P2 Cyclohexylmethacrylat enthält.

6. verträgliche Polymermischungen gemäß den Ansprüchen 1 - 5 dadurch gekennzeichnet, daß wenigstens eines der Polymeren P1 oder P2 eine Glastemperatur Tg > 50 Grad C besitzt.

**7.** Verträgliche Polymermischungen gemäß den Ansprüchen 1 - 6 dadurch gekennzeichnet, daß die Polymermischung PM eine Glastemperatur TG > 50 Grad C besitzt.

**8.** Polymerkomposition aus 40 - 99 Gew.-% der Polymermischung PM gemäß den Ansprüchen 1-7 und 60 - 1 Gew.-% eines weiteren von P1 und P2 chemisch unterscheidbaren Polymeren P3, das mit P1, P2 und PM unverträglich ist.

**9.** Polymerkomposition gemäß Anspruch 8, dadurch gekennzeichnet, daß der Brechungsindex der Polymermischung PM ($n_{D\,PM}$) bei Raumtemperatur mit dem Brechungsindex des Polymeren P3 ($n_{D\,P3}$) übereinstimmt, so daß gilt:

$$\left| n_D{}^{25}{}_{PM} - n_D{}^{25}{}_{P3} \right| < 0,01.$$

**10.** Polymerkomposition gemäß den Ansprüchen 8 und 9, dadurch gekennzeichnet, daß die Glastemperatur Tg der Polymeren P3 < 20 Grad C liegt.

**11.** Polymerkomposition gemäß den Ansprüchen 8-10 dadurch gekennzeichnet, daß das Polymere P3 wenigstens teilweise mit den Polymeren P1 und/oder P2 kovalent verknüpft ist.

**12.** Polymerkompositionen gemäß den Ansprüchen 8-10 dadurch gekennzeichnet, daß das Polymere P3 vernetzt ist.

**13.** Polymerkompositionen gemäß den Ansprüchen 8-10 dadurch gekennzeichnet, daß das Polymere P3 Polybutadien oder Polyisopren ist.

**14.** Gegenstände aus den verträglichen Polymermischungen gemäß den Ansprüchen 1-13.

**15.** Gegenstände aus der verträglichen Polymermischung PM gemäß den Ansprüchen 1 - 14 mit einem Überzug aus Polymer P2.

**16.** Witterungsbeständige Gegenstände gemäß Anspruch 15, dadurch gekennzeichnet, daß das Polymer P2 einen gegebenenfalls einpolymerisierten UV-Absorber in Anteilen von 0,1 - 20 Gew.-% (bezogen auf das Polymer P2) enthält.

**17.** Spritzgegossene Formkörper gemäß den Ansprüchen 14-16.

**18.** Extrudierte Formkörper gemäß den Ansprüchen 14-16.

**19.** Datenspeicherplatte, insbesondere für optisch ablesbare Information, gemäß den Ansprüchen 14-18.

**20.** Optische Gradientenfaser mit einem Kern aus Polymer P1 und einer Hülle aus Polymer P2 und einer Zwischenschicht aus einer verträglichen Polymermischung gemäß Anspruch 1.

**21.** Lösungen von Polymermischungen PM gemäß Anspruch 1.

**22.** Polymerfilm aus Lösungen gemäß Anspruch 21.

**23.** Kunststoffdispersionen, enthaltend nebeneinander Latices aus Polymer P1 und Polymer P2 gemäß Anspruch 1.

**24.** Filme aus den Kunststoffdispersionen gemäß Anspruch 23.

**25.** Verfahren zur Herstellung von verträglichen Polymermischungen PM,
   dadurch gekennzeichnet,
daß man die Komponenten

   (A) 0,1 - 99,9 Gew.-% eines Polystyrols, das zu wenigstens 95 Gew.-% aus Styrol aufgebaut ist (Polymer P1) und

   (B) 99,9 - 0,1 Gew.-% eines Polymethacrylsäuresters der

a) zu mehr als 90 bis zu 100 Gew.% aus Ethylmethacrylat und
b) zu null bis weniger als 10 Gew.-% aus wenigstens einem mit Ethylmethacrylat copolymerisierbaren Monomeren, mit der Maßgabe, daß sich a) plus b) zu 100 Gew.-% ergänzen (Polymer P2) aufgebaut ist, wobei wenigstens eine der Polymerkomponenten ein Molekulargewicht von weniger als 100 000 Dalton besitzt,

in eine homogene Mischung überführt.

26. Verfahren gemäß Anspruch 25, dadurch gekennzeichnet, daß man die Komponenten (A) und (B) auf mechanischem Wege in eine homogene Mischung überführt.

27. Verfahren zur Herstellung von oberflächlich beschichteten Gegenständen, dadurch gekennzeichnet, daß man das Polymer P1 gemäß Anspruch 1 mit einer Oberflächenschicht aus dem Polymeren P2 überzieht.

28. Verwendung der Polymermischungen gemäß den Ansprüchen 1 bist 13 zur Herstellung von Datenspeicherplatten, insbesondere für optisch ablesbare Information.

29. Verwendung der Polymermischungen gemäß Anspruch 1 zur Herstellung optischer Gradientenfasern mit einem Kern aus Polymer P1 und einer Hülle aus Polymer P2 und einer Zwischenschicht aus einer verträglichen Polymermischung gemäß den Ansprüchen 1, 14 und 15.

## Claims

1. Compatible polymer mixtures of polystyrene and a polymethacrylic acid ester, characterised in that the polymer mixture PM is formed from the components

   (A) 0.1 - 99.9 wt.% of a polystyrene which is synthesised, in an amount of at least 95 wt.%, from styrene (polymer P1) and

   (B) 99.9 - 0.1 wt.% of a polymethacrylic acid ester which is synthesised,

   a) in an amount of more than 90 up to 100 wt.%, from ethylmethacrylate and,
   b) in an amount of 0 up to less than 10 wt.%, from at least one monomer which is copolymerisable with ethylmethacrylate, with the proviso that a) plus b) make up 100 wt.% (polymer P2), and that at least one of the polymer components has a molecular weight of less than 100,000 Dalton.

2. Compatible polymer mixtures according to claim 1, characterised in that both polymer P1 and polymer P2 have a molecular weight within the range of > 2000 up to < 100,0000 Dalton.

3. Compatible polymer mixtures according to claim 1, characterised in that the polymer mixture PM is formed from polystyrene as Component (A) and from polyethylmethacrylate as Component (B).

4. Compatible polymer mixtures according to claim 1, characterised in that polymer P2 in Component (B) contains the (meth)acrylic acid ester of a $C_5$-$C_6$-cycloalkanol as ingredient b).

5. Compatible polymer mixtures according to claim 4, characterised in that polymer P2 contains cyclohexylmethacrylate.

6. Compatible polymer mixtures according to claims 1 to 5, characterised in that at least one of the polymers P1 or P2 has a glass transition temperature Tg > 50°C.

7. Compatible polymer mixtures according to claims 1 to 6, characterised in that the polymer mixture PM has a glass transition temperature Tg > 50°C.

8. A polymer composition comprising 40 to 99 wt.% of polymer mixture PM according to claims 1 to 7 and 60 to 1 wt.% of a further polymer P3 which is different from P1 and P2 chemically and incompatible with P1, P2 and PM.

9. A polymer composition according to claim 8, characterised in that the refractive index of the polymer mixture PM ($n_{D\,PM}$) is in conformity with the refractive index of polymer P3 ($n_{D\,P3}$), so that $n_D^{25}{}_{PM} - n_D^{25}{}_{P3}/< 0.01$.

10. A polymer composition according to claims 8 and 9, characterised in that the glass transition temperature Tg of the polymers P3 < 20°C.

11. A polymer composition according to claims 8 to 10, characterised in that the polymer P3 is, at least partially, covalently bonded to the polymers P1 and/or P2.

12. Polymer compositions according to claims 8 to 10, characterised in that the polymer P3 is cross-linked.

13. Polymer compositions according to claims 8 to 10, characterised in that the polymer P3 is polybutadiene or polyisoprene.

14. Articles made of the compatible polymer mixtures according to claims 1 to 13.

15. Articles made of the compatible polymer mixture PM according to claims 1 to 14 having a coating made of polymer P2.

16. Weather-resistant articles according to claim 15, characterised in that the polymer P2 contains an optionally homopolymerised ultraviolet absorber in amounts of 0.1 to 20 wt.% (based on the polymer P2).

17. Injection-moulded articles according to claims 14 to 16.

18. Extruded articles according to claims 14 to 16.

19. Data storage plate, more particularly for optically readable information, according to claims 14 to 18.

20. Optical gradient fibre with a core made of polymer P1 and a covering made of polymer P2 and an intermediate layer made of a compatible polymer mixture according to claim 1.

21. Solutions of polymer mixtures PM according to claim 1.

22. Polymer film made of solutions according to claim 21.

23. Plastic dispersions containing lattices of polymer P1 and polymer P2 according to claim 1 side by side.

24. Films made of plastic dispersions according to claim 23.

25. A process for preparing compatible polymer mixtures PM, characterised in that the components

(A) 0.1 - 99.9 wt.% of a polystyrene which is synthesised, in an amount of at least 95 wt.%, from styrene (polymer P1) and

(B) 99.9 - 0.1 wt.% of a polymethacrylic acid ester which is synthesised,

a) in an amount of more than 90 up to 100 wt.%, from ethylmethacrylate and,
b) in an amount of 0 up to less than 10 wt.%, from at least one monomer which is copolymerisable with ethylmethacrylate, with the proviso that a) plus b) make up 100 wt.% (polymer P2), and
at least one of the polymer components having a molecular weight of less than 100,000 Dalton,
are converted into a homogenous mixture.

26. A process according to claim 25, characterised in that the components (A) and (B) are converted into a homogenous mixture by mechanical means.

27. A process for preparing articles coated on their surface, characterised in that the polymer P1 according to claim 1 is coated with a surface layer consisting of the polymer P2.

**28.** Use of the polymer mixtures according to claims 1 to 13 for preparing data storage plates, more particularly for optically readable information.

**29.** Use of the polymer mixtures according to claim 1 for preparing optical gradient fibres with a core made of polymer P1 and a coating made of polymer P2 and an intermediate layer made of a compatible polymer mixture according to claims 1, 14 and 15.

## Revendications

**1.** Mélanges de polymères compatibles, composés de polystyrène et d'un polyester d'acide méthacrylique, caractérisés en ce que le mélange de polymères PM est formé à partir des composants suivants:

A) 0,1 à 99,9% en poids d'un polystyrène qui est composé de styrène pour au moins 95% en poids (polymère P1) et

B) 99,9 à 0,1% en poids d'un polyester d'acide méthacrylique qui est composé,

a) pour plus de 90% et jusqu'à 100% en poids, de méthacrylate d'éthyle et

b) pour 0 à moins de 10% en poids, d'au moins un monomère copolymérisable avec le méthacrylate d'éthyle, étant spécifié que la somme de a) plus b) est égale à 100% en poids (polymère P2),

et en ce que l'un au moins des composants polymères a un poids moléculaire de moins de 100 000 daltons.

**2.** Mélanges de polymères compatibles selon la revendication 1, caractérisés en ce que le polymère P1 et le polymère P2 ont l'un et l'autre un poids moléculaire dans la gamme comprise entre > 2000 et < 100 000.

**3.** Mélanges de polymères compatibles selon la revendication 1, caractérises en ce que le mélange de polymères PM est formé à partir de polystyrène en tant que composant (A) et de polyméthacrylate d'éthyle en tant que composant (B).

**4.** Mélanges de polymères compatibles selon la revendication 1, caractérisés en ce que le polymère P2 dans le composant (B) contient l'ester d'acide (méth)acrylique et d'un cycloalcanol en $C_5$-$C_6$ en tant que constituant b).

**5.** Mélanges de polymeres compatibles selon la revendication 4, caractérisés en ce que le polymère P2 contient du méthacrylate de cyclohexyle.

**6.** Mélanges de polymères compatibles selon l'une quelconque des revendications 1 a 5, caractérisés en ce que l'un au moins des polymères P1 et P2 a une température de transition vitreuse Tg supérieure à 50°C.

**7.** Mélanges de polymeres compatibles selon l'une quelconque des revendications 1 à 6, caractérisés en ce que le mélange de polymères PM a une température de transition vitreuse Tg supérieure à 50°C.

**8.** Composition de polymères de 40 à 99% en poids du mélange de polymères PM selon l'une quelconque des revendications 1 à 7 et de 60 à 1% en poids d'un autre polymère P3 qui est différenciable chimiquement de P1 et P2 et qui est incompatible avec P1, P2 et PM.

**9.** Composition de polymères selon la revendication 8, caractérisée en ce que l'indice de réfraction du mélange de polymeres PM ($n_{D\ PM}$) à la température ambiante est en concordance avec l'indice de réfraction du polymère P3 ($n_{D\ P3}$), de sorte que l'on a:

$$ln_D{}^{25}{}_{PM} - n_D{}^{25}{}_{P3}| < 0,01.$$

**10.** Composition de polymeres selon la revendication 8 ou 9, caractérisee en ce que la température de transition vitreuse des polymères P3 se situe au-dessous de 20°C.

**11.** Composition de polymeres selon l'une quelconque des revendications 8 à 10, caractérisée en ce que le polymère P3 est relié au moins partiellement par liaison covalente aux polymères P1 et/ou P2.



**12.** Composition de polymères selon l'une quelconque des revendications 8 à 10, caractérisée en ce que le polymère P3 est réticulé.

**13.** Composition de polymères selon l'une quelconque des revendications 8 à 10, caractérisée en ce que le polymère P3 est du polybutadiène ou du polyisoprène.

**14.** Objets fabriqués en mélanges de polymères compatibles selon l'une quelconque des revendications 1 à 13.

**15.** Objets fabriqués en mélange de polymères compatibles selon l'une quelconque des revendications 1 à 14 avec un revêtement en polymère P2.

**16.** Objets stables aux intempéries selon la revendication 15, caractérisés en ce que le polymère P2 contient un agent absorbant l'UV, éventuellement en liaison polymère, dans des proportions de 0,1 à 20% en poids (par rapport au polymère P2).

**17.** Corps moulés par injection selon l'une quelconque des revendications 14 à 16.

**18.** Corps moulés par extrusion selon l'une quelconque des revendications 14 à 16.

**19.** Disque de mémorisation de données, en particulier pour des informations lisibles optiquement, selon l'une quelconque des revendications 14 à 18.

**20.** Fibres optiques à gradient d'indice, comprenant une âme en polymère P1 et une gaine en polymère P2 avec une couche intermédiaire en un mélange de polymères compatibles selon la revendication 1.

**21.** Solutions de mélanges de polymères PM selon la revendication 1.

**22.** Film de polymère formé à partir de solutions selon la revendication 21.

**23.** Dispersions de matières plastiques, contenant simultanément des latex de polymère P1 et de polymère P2 selon la revendication 1.

**24.** Films formés à partir des dispersions de matières plastiques selon la revendication 23.

**25.** Procédé de préparation de mélanges de polymères compatibles PM,
caractérisé en ce que l'on transforme en un mélange homogène

A) 0,1 à 99,9% en poids d'un polystyrène qui est composé de styrène pour au moins 95% en poids (polymère P1) et
B) 99,9 à 0,1% en poids d'un polyester d'acide méthacrylique qui est composé,

a) pour plus de 90% et jusqu'à 100% en poids, de méthacrylate d'éthyle et
b) pour 0 à moins de 10% en poids, d'au moins un monomère copolymérisable avec le méthacrylate d'éthyle, étant spécifié que la somme de a) plus b) est égale à 100% en poids (polymère P2),

l'un au moins des composants polymères ayant un poids moléculaire de moins de 100 000 daltons.

**26.** Procédé selon la revendication 25, caractérisé en ce que l'on transforme les composants (A) et (B) en un mélange homogène par voie mécanique.

**27.** Procédé de fabrication d'objets enduits superficiellement, caractérisé en ce que l'on revêt le polymère P1 selon la revendication 1 d'une couche superficielle du polymère P2.

**28.** Utilisation des mélanges de polymères selon l'une quelconque des revendications 1 à 13 pour la fabrication de disques de mémorisation de données, en particulier pour des informations lisibles optiquement.

**29.** Utilisation des mélanges de polymères selon la revendication 1 pour la fabrication de fibres optiques à gradient d'indice, comprenant une âme en polymère P1 et une gaine en polymère P2 avec une couche intermédiaire en

EP 0 501 329 B1

un mélange de polymères compatibles selon les revendications 1, 14 et 15.